# EUROPEAN PATENT SPECIFICATION

(11) **EP 4 075 144 B1**
(45) Date of publication and mention of the grant of the patent: **17.07.2024**
(21) Application number: 21167883.4
(22) Date of filing: 12.04.2021
(51) Int. Cl.: G01N 35/00, B25J 15/06, G01N 23/20008, G01N 23/20033

(54) **SYSTEM FOR HANDLING OF A SAMPLE IN A MEASURING APPARATUS**
SYSTEM ZUR HANDHABUNG EINER PROBE IN EINEM MESSGERÄT
SYSTÈME DE MANIPULATION D'UN ÉCHANTILLON DANS UN APPAREIL DE MESURE

(43) Date of publication of application: 19.10.2022
(73) Proprietor: suna-precision GmbH, 22607 Hamburg (DE)
(72) Inventor: BIRKHEUSER, Elke Stephanie, DE-22607 Hamburg (DE)
(74) Representative: Seemann & Partner Patentanwälte mbB

(56) References cited:
- EP-A2- 1 291 647
- DE-B3- 102015 117 378
- US-B2- 10 493 457

## Description

The invention relates to a system for handling of a sample. The system comprises a sample storage having at least a first sample position, a first magnetic or magnetizable sample holder, a control unit and a gripping apparatus. The sample storage is configured for use in a cold environment, for example in a reservoir filled with a cooling liquid such as liquid nitrogen. The first sample position is configured to receive the first sample holder, which is configured to hold the sample.

In X-ray structure analysis, cryogenically cooled samples, for example crystallized molecules, such as proteins, or biological cells or tissue are exposed to X-ray beams, for example at synchrotron radiation sources or laboratory based X-ray sources. The structure of the samples can be determined from the analysis of the diffracted or scattered X-rays.

Since ionizing radiation such as X-rays are harmful to humans, the sample transfer is preferably performed by automated systems that take the cryogenically cooled sample from a reservoir filled with a cooling liquid, for example a Dewar filled with liquid nitrogen, and place the sample in a measuring device in which the sample can be examined using the X-ray beam.

In an attempt to avoid unnecessary radiation damages on the sample, the latter is often kept under deep-freeze conditions in the measuring device. During transfer, heating of the sample must be prevented, as this can also lead to a destruction of the sample. For this purpose, mechanical gripping devices are applied that remove the sample from a sample storage, where it is kept under cryogenic conditions, and deposits it in the measuring device.

A gripping device, which is designed to keep the sample cold during transfer from the sample storage to the measuring device, is for example known from DE 10 2012 211 380 A1. The document describes a sample holder gripping device with an elongated carrier, one end of which is designed for attachment to an industrial robot or for manual handling. At its opposite end, it carries a sample gripper which is designed to grip a sample holder carrying a sample to be examined. There is a reservoir for vaporizable refrigerant, which is arranged inside the carrier adjacent to a sample receptacle. An interface of the refrigerant reservoir communicates with the sample receptacle and is permeable to liquid and vaporized refrigerant.

Such mechanical gripping devices are, however, often prone to mechanical failure. The gripping device is subject to severe cooling when it is immersed in the liquid nitrogen-filled reservoir to pick-up the sample. Subsequently, the very cold part is exposed to almost normal environmental conditions, what results in icing of the cold parts. Furthermore, common materials and conventional designs of mechanical elements of the gripping device can warp under the influence of the temperature change, which can limit the functionality of the gripping device. In addition, the use of materials such as stainless steel leads to heat transfer into the Dewar due to the relatively high thermal conductivity of the material. This results in undesirable additional evaporation of liquid nitrogen.

A cryogenic system including a gripping device, which is suitable for repeated use under liquid nitrogen is for example known from DE 10 2015 117 378 B3. The system comprises a sample storage, which is provided for insertion in a reservoir filled with a cooling liquid such as liquid nitrogen. Furthermore, the system comprises a control unit and a gripping device. A sample place of the sample storage has a permanent magnet and an electromagnetic coil for holding a magnetic sample holder in place. The gripping device comprises a sample gripper equipped with a permanent magnet. The control unit is electrically connected to the electromagnetic coil in that it can change a holding force on the sample holder. When removing the sample holder from the sample place, the control unit applies a current on the coil such that the holding force generated is reduced to such an extent that the sample can be lifted from the sample position by the sample gripper. When placing the sample holder on the sample place the control unit applies a current such that the holding force generated on the sample holder is increased to such an extent that a sample holder cannot be lifted from the sample place with the sample gripper. As a result, the sample holder detaches from the gripper when lifting the latter.

In this system, however, various electrical and electronic equipment needs to be arranged in cold space, i.e. in the Dewar. This requires the use of electronic components, which can operate under very cold conditions. Furthermore, electrical ducts need to pass the wall of the reservoir. Special parts and materials, which are suitable for this type of duct, have to be used. The electrical ducts also lead to heat transfer into the Dewar.

US 10,493,457 B2 discloses a sample storage and retrieval system comprising a sample container and a sample transport including a gripper device. The gripper device is configured to hold the sample container via a magnetic gripping member that can be a permanent magnet or an electrical winding.

It is an object of the invention to provide a system for handling of a sample, which minimizes heat deposition into a cryogenic environment.

The object is solved by a system for handling of a sample , the system comprising a sample storage having at least a first sample position, a first magnetic or magnetizable sample holder, a control unit and a gripping apparatus, wherein the sample storage is configured for use in a cold environment, in particular in a reservoir filled with a cooling liquid, and the first sample position is configured to receive the first sample holder, which is configured to hold the sample, wherein the system is further enhanced in that the first sample position comprises a first permanent magnet, which is configured to apply a holding force on the first sample holder, the gripping apparatus comprises a sample gripper having an electromagnetic gripping device comprising an electromagnetic coil, the electromagnetic gripping device being configured to apply a gripping force on the first sample holder, the control unit is coupled to the electromagnetic coil of the electromagnetic gripping device in that it can control a current through the electromagnetic coil so as to change the gripping force applied on the first sample holder and the control unit is configured to control the current through the electromagnetic coil in an holding mode in that the gripping force generated by the electromagnetic gripping device is set to a holding value such that the first sample holder can be lifted from the first sample position and/or to control the current through the electromagnetic coil in a release mode in that the gripping force generated by the electromagnetic gripping device is set to a release value such that the first sample holder cannot be lifted from the first sample position by the sample gripper, wherein the electromagnetic gripping device comprises a permanent magnet and the electromagnetic coil, wherein the electromagnetic coil is configured to enhance or attenuate a magnetic flux of the permanent magnet, and the control unit is configured in that it can control the current through the electromagnetic coil so as to enhance or attenuate the gripping force applied on the sample holder by the permanent magnet.

The system for handling of a sample avoids at least some of the disadvantages known from prior art solutions. The system, in particular the sample storage, has a less complex design. It does not comprise any electric or electronic parts. Due to this, it is no longer necessary to provide electric ducts crossing the thermal barrier between the cold space, in which the samples are kept, and the environment. The first sample position comprises a permanent magnet only. By this measure, the heat input into the reservoir filled for example with a cooling liquid can be minimized. The permanent magnet can be of arbitrary shape or design, for example it can be ring-shaped.

Within the context of this specification, the term "control" shall be interpreted in that it refers to simple control and/or to feedback control.

Because the design of the sample storage and the sample positions is rather simple, it can be changed very quickly and without great effort. This is for example advantageous, if a size of the sample storage is to be changed. A higher or lower number of sample positions or an adaption of the sample storage to a new type of reservoir can be quickly performed. Similar advantages apply to the sample positions. These can be for example quickly adapted in size and/or shape to a new type or design of the sample holders.

The system according to aspects of the invention comprises the first sample holder being configured for placement on the first sample position. The first sample position is configured to receive the suitable sample holder to be placed thereon. The first sample holder enables the sample or specimen to be examined or measured, to be stored in the reservoir, transported by the gripping device, and to be placed in the measuring device. The sample is for example a biological sample, such as a crystalline protein or molecule intended for X-ray structure analysis. It is arranged on the sample holder which makes it possible to store the sample in the reservoir, to remove it automatically from the reservoir together with the sample holder by the gripping device and to place it in the measurement site of, for example, the synchrotron radiation line or in an X-ray diffractometer.

At least parts or components of the first sample holder are manufactured from a magnetizable or magnetic material so as to allow the first sample holder to be safely held in the first sample position. The permanent magnet is designed or dimensioned with respect to this requirement, in particular with respect to the magnetic flux or magnetic force applied by the first sample position on the first sample holder. The permanent magnet is for example a bar magnet or a ring magnet.

The system can further comprise a control unit, which is electrically coupled to the electromagnetic coil such that it can control the current through the coil. The control unit can be, for example, one or more interconnected integrated circuits or a microcontroller. For example, the electrical connection between the control unit and the electromagnetic coil can be such that the control unit directly controls the current flowing through the electromagnetic coil. However, it is also possible for the control unit to control only switching elements that can be used to control the coil current through the electromagnetic coil.

The electromagnetic coil is configured in that the resulting magnetic field generated by the permanent magnet and the electromagnetic coil can be varied by the current flowing through the electromagnetic coil, i.e., the coil current. The resulting magnetic field of the electromagnetic gripping device, which generates a holding force on the sample holder, is the sum of the static magnetic field of the permanent magnet and the variable magnetic field of the electromagnetic coil.

Depending of the direction of the coil current, the variable magnetic field changes its prefix. Thereby, the holding force of the electromagnetic gripping device can be raised or lowered by either enhancing or attenuating the static magnetic field of the permanent magnet.

According to a first embodiment, the permanent magnet placed in the first sample position provides a holding force that is greater than a gripping force provided solely by the permanent magnet in the electromagnetic gripping device. Hence, the gripping device is unable to lift the sample holder from the first sample position without the additional magnetic flux generated by the electromagnetic coil. If the magnetic field of the permanent magnet in the electromagnetic gripping device is increased by the coil current, the gripping force on the sample holder placed on the first sample position also changes and it exceeds the holding force.

The control unit is configured to operate the electromagnetic coil, for example by appropriate hardware or software design, at least in the holding mode or the release mode, but preferably both the holding mode and the release mode.

In the release mode, the control unit controls the coil current of the electromagnetic coil in the electromagnetic gripping device such that it generates a magnetic field that is opposite to the magnetic field of the permanent magnet and thus reduces the resulting magnetic field of the electromagnetic gripping device. The current is selected in that the magnetic field or the holding force applied by the magnetic field on the first sample holder is so low that the sample gripper can be lifted away from the first sample position while leaving the first sample holder on the first sample position. For example, the release mode can be left activated after the gripping device has placed the first sample holder on the first sample position to securely move the gripping device away from the sample.

In the gripping mode, the coil current is controlled by the control unit such that the magnetic field of the coil amplifies the static magnetic field of the permanent magnet and the force on the first sample holder resulting from the magnetic field of the electromagnetic gripping device exerts a holding force on the first sample holder, which is generated by the permanent magnet of the first sample position. In the gripping mode, the magnetic field of the coil can also amplify the static magnetic field to handle a sample holder that is so heavy in weight that the lifting force generated by the permanent magnet of the gripping device is insufficient to lift such a sample holder placed on the first sample position.

In any case, the control unit is also configured to switch the electromagnetic coil so that no current is flowing through it and only the magnetic field of the permanent magnet is available. This mode of operation can be chosen during transport of the sample holder to the measuring apparatus to avoid unnecessary heat transfer from the electromagnetic coil to the sample.

According to a second embodiment, the permanent magnet placed in the first sample position provides a holding force that is smaller than a gripping force provided solely by the permanent magnet in the electromagnetic gripping device. Hence, the gripping device can lift the first sample holder from the first sample position without any additional magnetic flux generated by the electromagnetic coil.

In this embodiment, the control unit can be configured to operate the electromagnetic coil in the release mode only. The gripping force, which is generated by the permanent magnet, is so great that the gripping device can only move away while leaving the first sample holder on the first sample position when the magnetic field of the permanent magnet is attenuated. The advantage of this embodiment resides in that the coil current is switched on for only a very short time period, namely when the first sample holder is placed on the first sample position and the gripping device is retracted. Hence, additional thermal energy is introduced into the cooling liquid by the coil current for only a very short time.

According to a third embodiment, the permanent magnet placed in the first sample position provides a holding force that is approximately equal to the gripping force provided solely by the permanent magnet in the electromagnetic gripping device. In this embodiment, the control unit is configured to operate the electromagnetic coil of the electromagnetic gripping device in both modes of operation, i.e. in the gripping mode and in the release mode. This has the advantage of ensuring particularly reliable operation of the system, since the gripping force generated by the permanent magnet more reliably holds the sample holder, when compared to the first embodiment. However, the magnetic field is not so strong that the sample is jerkily pulled down to the first sample place before the gripping device can deposit the sample holder there, as it is potentially the case according to a second embodiment. The permanent magnet of the gripping device can also be designed in such a way that the sample holder is not already lifted when the gripping device approaches, but only when the gripping device is completely positioned on the sample and the gripping mode has been activated.

In another advantageous embodiment, the system is further enhanced in that the sample storage comprises a plurality of further sample positions, wherein every further sample position comprises a further permanent magnet configured to apply a holding force on the first sample holder when placed on the further sample position and wherein the gripping apparatus is configured to pick-up or set-down the first sample holder on an arbitrary further sample position.

A plurality of samples can be kept ready for successive examination in the measuring device. All the sample positions can be configured similarly. In other words, every further sample position can be configured as the first sample position. Each of the further sample positions comprises a further permanent magnet for holding the magnetic or magnetizable first sample holder with a holding force in place. Also the further permanent magnets can be configured as the first permanent magnet, for example with similar size and magnetic strength. Advantageously, there is no need for any wiring or electronic connections to or from the sample positions and this applies to all sample positions. Hence, the entire sample storage has a flexible, simple and economic design. However, according to a further embodiment, the further sample positions can be configured differently from the first sample position. For example, the further sample positions can include places for storing sample holders having a size, weight, shape or configuration, which differs from that of the first sample holder. This entails the system to include further sample holders. However, also the further sample holders are advantageously configured in that they can be gripped and handled by the sample gripper. This for example requires that also the further sample holders are manufactured at least in part from a magnetic or a magnetizable material.

According to still another embodiment, the system is further enhanced in that the control unit is arranged in the sample gripper, in particular in a section of the sample gripper that is not intended to contact the cold environment when picking up a sample from the sample storage.

Advantageously, the control unit, which comprises electronic parts and components, is not exposed to very cold temperatures. Hence, it is not necessary to design the control unit to be operable under cold conditions. This significantly simplifies the design of the control unit, which also renders the control unit more economic. Furthermore, the control unit will operate with higher reliability in the absence of very cold temperatures. Finally, the heat transfer into the cold environment can be minimized.

The system is advantageously further enhanced in that it further comprises a reservoir configured to accommodate a cooling liquid, in particular liquid nitrogen, providing a cold environment, and in which the sample storage is arranged. The reservoir is for example a Dewar.

In an advantageous embodiment, the sample gripper comprises an interior space opening out at a distal end of the sample gripper, wherein the interior space is configured to receive at least a part of the first sample holder, and wherein the electromagnetic coil is arranged to at least partly surround the interior space. When the sample holder is held by the sample gripper, the sample holder at least partly projects into the interior space. For example, the sample holder comprises an elongated member, at the tip of which the sample is held. The sample holder, in particular its elongated member, is inserted in the interior space from the distal end of the sample gripper. Advantageously, the interior space provides a thermal insulation for the sample during handling of the same. For example, the sample can be kept at cryogenic temperatures when it is transferred from the cold sample storage to the measurement apparatus. The arrangement of the electromagnetic coil in that it at least partly surrounds the interior space allows a particular compact design of the sample gripper.

In still another embodiment, the sample gripper comprises a measuring coil, which is arranged to at least partly surround the interior space, wherein in particular the measuring coil is arranged having a distance to the electromagnetic coil and the measuring coil is arranged closer to the distal end than the electromagnetic coil. The measuring coil can be advantageously used for various purposes.

According to another advantageous embodiment, the system is further enhanced in that the control unit is configured to measure a first magnetic flux generated by the first permanent magnet of the first sample position so as to determine an amount of the holding force applicable on the first sample holder when being placed in the first sample position. In particular, the control unit is configured to measure the first magnetic flux by analyzing a first test signal applied on the electromagnetic coil and/or on the measuring coil.

The control unit is configured to determine and measure a characteristic of the first permanent magnet. For this purpose, the control unit can, for example, apply a sinusoidal AC voltage with constant frequency and amplitude as the first test signal to the measuring coil and/or the electromagnetic coil. The measuring coil or the electromagnetic coil, depending on the particular implementation, together with a capacitor can be configured as resonant circuit. When the first magnetic flux of the first permanent magnet interacts with this resonant circuit, this results in detuning. The amount of detuning depends on the distance from the first sample position and the strength of the permanent magnet. The detuning of the resonant circuit is due to a change in inductance of the measuring coil.

Hence, the measurement value can be used as a measure for the distance to the first sample position. Furthermore, for example, when it is known that the gripping device is at the end position, the measurement value serves as a measure for the strength of the permanent magnet. The strength of the permanent magnet can in particular be determined for all sample positions. Based on these values, the holding force needed for detaching a sample holder can be calculated for each individual sample position.

Furthermore, this information can be used to control the activation of the gripping mode or the release mode. For example, the control unit can be designed to activate the release mode only when the sample holder is successfully / completely placed on the first sample position and the inductance of the measuring coil has changed as expected. This allows the sample holder to be placed smoothly on the sample position. The same applies when lifting the sample holder from the sample place.

In another embodiment, the control unit is configured to determine the presence of the first sample holder in the interior space of the sample gripper by analyzing a second test signal applied on the electromagnetic coil and/or on the measuring coil.

Similar to the above described embodiment, the control unit can, for example, apply a sinusoidal AC voltage with constant frequency and amplitude as the second test signal to the measuring coil and/or the electromagnetic coil. The parameters between the first and second test signal can be chosen such that no disturbance, such as crosstalk interference and the like, between the two signals takes place. The measuring coil or the electromagnetic coil, depending on the particular implementation, together with another capacitor can be configured as a further resonant circuit. When the sample holder is located in the interior space, this changes the inductance of the measuring coil and the electromagnetic coil. Again, this results in detuning of the further resonant circuit. This can be taken as a signal for the presence of the sample holder at the sample gripper. Advantageously, unintended loss of samples, for example upon pickup in the Dewar, can be avoided.

When the test signal is applied on the electromagnetic coil, the test signal can be modulated on the signal, which is applied on the electromagnetic coil when switching the same to holding mode or release mode. This applies to both, the first and the second test signal.

In the embodiments described above, the gripping device is configured to lift and hold one sample holder at a time, i.e. the sample gripper can only lift one sample at a time. However, it is also conceivable that the sample gripper is configured to hold and lift several samples at once. For this purpose, the control unit can be designed, for example, to operate a plurality of sample grippers simultaneously in a release mode or a gripping mode. This can be useful, for example, if the measuring device has several measuring stations that can be occupied in parallel by samples, or if an entire set of samples is to be placed in the reservoir before an examination or is to be removed from the reservoir after an examination.

Advantageously, the system can further comprise a measuring apparatus, wherein the gripping apparatus is configured to transfer the sample between the sample storage and the measuring apparatus. The measuring apparatus is in particular a measuring apparatus for analyzing the sample by ionizing radiation, such as X-rays. The measuring apparatus can range from for example a laboratory instrument, such as a typical X-ray diffractometer, to a measuring station at a synchrotron beam line.

The invention is described below, without restricting the general teaching of the invention, based on exemplary embodiments, wherein reference is made expressly to the drawings with regard to the disclosure of all details according to the invention that are not explained in greater detail in the text. The drawings show in:
- Fig. 1: shows a schematic diagram of an embodiment of a system according to the invention,
- Fig. 2: shows a schematic sectional view through an embodiment of a sample position with a sample holder placed in position and being gripped by the sample gripper, an embodiment of which is also shown.
- Fig. 3: shows a schematic sectional view through the sample gripper shown in Fig. 2,
- Fig. 4: shows a schematic perspective view of a sample holder, and
- Fig. 5: shows a schematic sectional view through the sample holder of Fig. 4.

In the drawings, same or similar elements or respectively corresponding parts are provided with the same reference numbers in order to prevent the item from needing to be reintroduced.

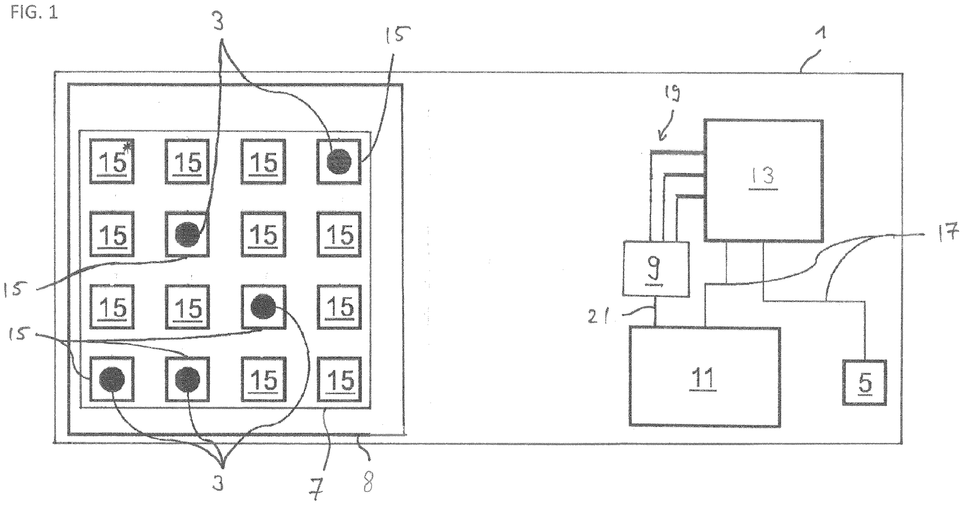

Fig. 1 is a simplified schematic structure of a system 1 for handling of a sample being arranged on a first sample holder 3. The sample itself is not depicted in the figure. Furthermore, the system 1 comprises a plurality of sample holders 3, which by way of an example only, are all configured as the first sample holder 3. However, the system 1 can also comprise different types of sample holders 3. The sample holder can be tailored to the type of sample, which they carry. For the sake of better intelligibility, reference is made to a sample holder or sample holders in general, bearing in mind that they can be differently designed as long as they can be gripped or handled by the gripping device, which will be explained in the following.

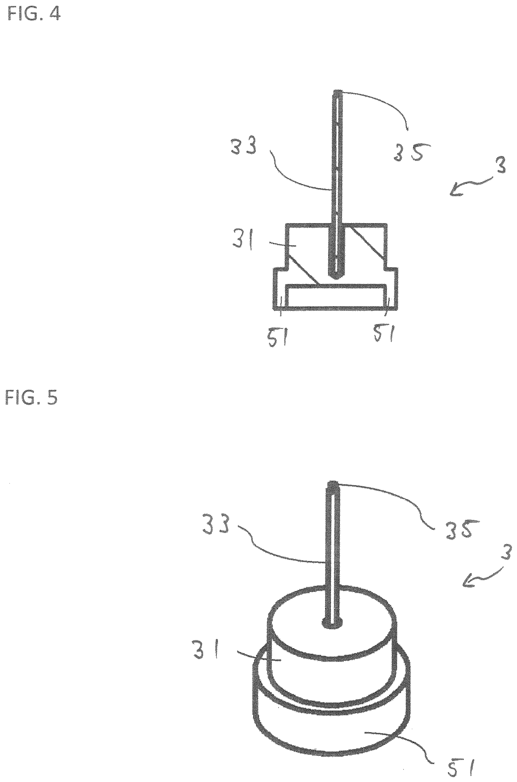

The system 1 is for providing the sample in a measuring apparatus 5. The measuring apparatus 5 can be for example an X-ray diffractometer or a measuring station of a synchrotron beam line. The sample holder 3 will be descripted in more detail below with reference to Figs. 4 and 5. It carries the sample, which is actually to be examined in the measuring apparatus 5. The sample can be a biological sample, for example a molecule present in crystalline form. The sample is always stored and handled together with the sample holder 3.

The system 1 further comprises a sample storage 7, which is for example a reservoir 8 filled with a cooling liquid. Liquid nitrogen can be used as the cooling liquid. The sample storage 7 is configured to accommodate the sample holders 3 on a first sample position 15*. Similar to the explanations given with respect to the sample holder 3 above, all the sample positions 15 can be configured as the first sample position 15*. However, they can also be different. Certain sample holders 3 can be designed to be placed on certain sample positions 15.

When the reservoir 8 is filled for example with the cooling liquid, the samples carried by the sample holders 3 are completely covered by the cooling liquid. The system 1 further comprises a control unit 9 and a gripping apparatus 11. The measuring apparatus 5 and the gripping apparatus 11 are coupled to a processing unit 13 via suitable data lines 17. The processing unit 13 is connected via a bus line 19 to the control unit 9 operating the gripping apparatus 11 via a suitable electrical connection 21, which is for example a power supply line for supplying individually operating actuators of the gripping apparatus 11.

All devices, namely the processing unit 13, the control unit 9 and the gripping apparatus 11, are arranged outside the reservoir 8, which means outside the cold space. The gripping apparatus 11 is, however, configured to pick up the samples together with the sample holder 3 from the cold space. In other words, the gripping apparatus 11 is configured to dip in the cold nitrogen for example with a sample gripper arranged on a tip of, for example, a bar like a structure of the gripping apparatus 11. The parts of the gripping apparatus 11 contacting the cold liquid nitrogen are configured to be exposed to low temperatures, i.e. for entering the cold space.

The processing unit 13 can be a commercially available computer being configured with suitable connectors for communication with the control unit 9, the gripping apparatus 11 and the measuring apparatus 5. The processing unit 13 can be supplemented with one or more microcontrollers designed to perform various special tasks. The gripping apparatus 11 can be for example an industrial robot. This carries a sample gripper 23, which will be explained in more detail further below.

The sample storage 7 is configured for use in a cold environment, in particular in the reservoir 8 filled with the cooling liquid. The sample storage 7 comprises a first sample position 15*. In particular, the sample storage 7 comprises a plurality of sample positions 15, which are all configured similar to the first sample position 15*. Hence, details given with reference to the first sample position 15* also apply to the remaining other sample positions 15, according to this embodiment.

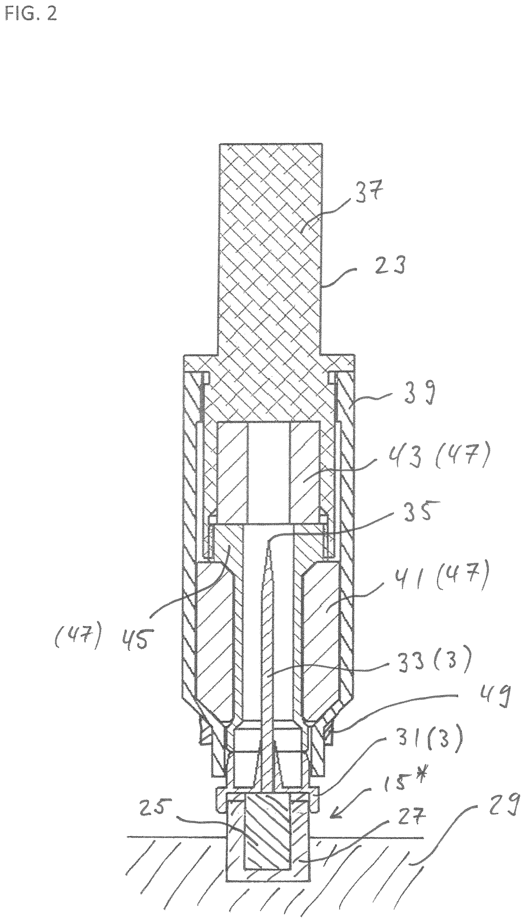

Fig. 2 shows a schematic sectional view though an embodiment of the first sample position 15* together with the sample holder 3 placed in position and being gripped by the sample gripper 23, which is a part of the gripping apparatus 11. The first sample position 15* comprises a first permanent magnet 25, which is for example a bar magnet or a ring magnet. This first permanent magnet 25 is placed in a suitable base 27, which is for example a part having the shape of a hollow cylinder closed on one end. The base 27 is for example manufactured from a magnetizable material suitable for conducting the magnetic flux generated by the permanent magnet 25. The base 27 is received in a suitable base plate 29, which also forms part of the sample storage 7.

The first sample position 15* is configured to apply a holding force on the sample holder 3. This holding force is due to the magnetic flux generated by the first permanent magnet 25. The sample holder 3 comprises a cap 31, which is made from magnetizable material. In addition to the cap 31, the sample holder 3 comprises a pin 33, which is attached to the cap. On top of the pin 33, there is the sample 35 to be examined in the measuring apparatus 5.

The sample gripper 23 comprises a holding part 37 configured to be received in a suitable receiving part of for example a robot as the gripping apparatus 11. A housing 39 is attached to the holding part 37. The holding part 37 and the housing 39 can be cylindrical components. The housing 39 incorporates an electromagnetic coil 41 and a permanent magnet 43. Directly adjacent to a lower end face of the permanent magnet 43, there is a hollow cylindrical pole shoe 45. The hollow cylindrical pole shoe 45 and, near to a distal end 50, the housing 39 surround an interior space 46. The pole shoe 45 guides the magnetic flux generated by the permanent magnet 43 to a lower or distal end 50, at which the pole shoe 45 faces the cap 31 of the sample holder 3. This is to apply a gripping force on the sample holder 3.

The control unit 9 is coupled to the electromagnetic coil 41 of the electromagnetic gripping device 47, which forms part of the gripping apparatus 11. The electromagnetic gripping device 47 comprises the permanent magnet 43, the electromagnetic coil 41 and the pole shoe 45, according to the depicted embodiment. The control unit 9 is configured to control a current through the electromagnetic coil 41 so as to change the gripping force applied on the sample holder 3. The control unit 9 is configured to operate in a holding mode and in a release mode. According to further embodiments, the control unit 9 is configured to be operable in either one of the two mentioned modes. In the embodiment descripted herein, the control unit 9 shall be configured to be operable in both modes.

In the holding mode, the control unit 9 is configured to control the current through the electromagnetic coil 41 in that the gripping force generated by the electromagnetic gripping device 47 is set to a holding value. The holding value of the gripping force is selected such that the sample holder 3 can be lifted from the first sample position 15*. In other words, the gripping force, which is generated by the electromagnetic gripping device 47, is greater than a holding force, that is generated by the permanent magnet 25 being located in the first sample position 15*.

In the release mode, the control unit 9 is configured to control the current through the electromagnetic coil 41 in that the gripping force generated by the electromagnetic gripping device 47 is set to a release value. The release value of the gripping force is selected such that the sample holder 3 cannot be lifted from the first sample position 15* by the sample gripper 23. In other words, in the release mode, the current through the electromagnetic coil 41 is adjusted such that the gripping force generated by the electromagnetic gripping device 47 is smaller than a holding force generated by the permanent magnet 25 in the first sample position 15*.

According to the above-descripted embodiment, the electromagnetic gripping device 47 comprises the permanent magnet 43 and the electromagnetic coil 41. According to a further embodiment, not depicted, the electromagnetic gripping device 47 of the sample gripper 23 does not comprise a permanent magnet 43. According to this embodiment, the electromagnetic holding force is solely generated by the magnetic flux of the electromagnetic coil 41. However, according to the present description, by way of an example only, reference is made to an electromagnetic gripping device 47 comprising both, the permanent magnet 43 and the electromagnetic coil 41.

The electromagnetic coil 41 is configured to enhance or attenuate the magnetic flux of the permanent magnet 43. The control unit 9 is coupled to the electromagnetic coil 41 in that it can control or feedback control the current through the electromagnetic coil 41 so as to enhance or attenuate the gripping force applied on the sample holder 3 by the permanent magnet 43.

The permanent magnet 25, which is arranged in the first sample position 15* provides a holding force on the sample holder 3. The permanent magnet 43 in the sample gripper 23 provides a gripping force on the sample holder 3. Considering these two forces, in the first state, the electromagnetic coil 41 does not contribute any flux, it is in other words switched off.

Assuming this state, there are mainly three scenarios/embodiments possible. In the first embodiment, the holding force of the permanent magnet 25 in the first sample position 15* is greater than the gripping force generated by the permanent magnet 43 in the sample gripper 23. According to a second embodiment, the force generated by the permanent magnet 25 in the first sample position 15* is lower than the gripping force generated by the permanent magnet 43 and the sample gripper 23. According to the third embodiment, the holding force of the permanent magnet 25 in the first sample position 15* is about equal to the gripping force generated by the permanent magnet 43 in the sample gripper 23.

In the first embodiment, the control unit 9 controls the coil current through the electromagnetic coil 41 in the release mode in such way that it generates a magnetic field that is opposite to the magnetic field of the permanent magnet 43 and thus decreases the resulting magnetic field of the electromagnetic gripping device 47. The current is adjusted such that the holding force on the sample holder 3 is reduced to such an extent, that the sample gripper 23 can be lifted away from the sample holder 3, while at the same time, the sample holder 3 is kept safe in position on the sample position 15. Basically, because the permanent magnet 43 in the sample gripper 23 is weaker than the permanent magnet 25 in the first sample position 15*, a reduction of the magnetic flux of the permanent magnet 43 by the electromagnetic field generated by the magnetic field 41 would not be necessary. However, and in particular depending on the amount of difference between the holding force provided by the permanent magnet 25 and the gripping force provided by the permanent magnet 43, it can be advantageous to reduce the gripping force when lifting the sample gripper 23 away from the sample holder 3, mainly as a safety measure.

In the gripping mode, the coil current through the electromagnetic coil 41 is controlled by the control unit 9 in such a way that the electromagnetic field generated by the electromagnetic coil 41 amplifies the static magnetic field of the permanent magnet 43. Hence, the gripping force of the electromagnetic gripping device 47 exceeds a holding force generated by the first sample position 15*. Hence, it is possible to lift the sample holder 3 away from the first sample position 15*. When the sample holder 15* is sufficiently far away from the first sample position 15*, for example during transfer to the measuring apparatus 5, depending of the wait of the sample holder 3, the electromagnetic coil 41 can be switched off. This can be performed if the holding force generated by the permanent magnet 43 is sufficiently great. This mode of operation can be advantageous since switching off the coil current in the electromagnetic coil 41 can avoid unnecessary warming of the sample 35 during transfer.

In the second embodiment, the permanent magnet 25 placed in the first sample position 15* provides a holding force that is smaller than a gripping force provided solely by the permanent magnet 43 in the electromagnetic gripping device 47. Hence, the gripping device 47 can lift the sample holder 3 from the first sample position 15* without any additional magnetic flux generated by the electromagnetic coil 41. However, in order to provide a smooth pickup action of the sample holder 3 by the sample gripper 23, the electromagnetic coil 41 is operated in release mode when the sample gripper 23 approaches the sample. In this mode of operation, the magnetic field of the permanent magnet 43 is reduced by the electromagnetic flux generated by the electromagnetic coil 41 and by this, it can be avoided, that the sample holder 3 jerks on the sample gripper 23 upon approach of the latter. When the sample gripper 23 is in position for pickup of the sample holder 3, the control unit 9 can switch off the current through the electromagnetic coil 41 and the sample holder 3 is picked up by the electromagnetic gripping device 47. To assist the lift-off action of the sample holder 3 from the first sample position, the control unit 9 can control a current through the electromagnetic coil 41 in that it generates a magnetic flux enhancing the magnetic flux generated by the permanent magnet 43.

In the third embodiment, the holding force generated by the permanent magnet 25 and the gripping force generated by the permanent magnet 43 are approximately the same. In this embodiment, the control unit 9 will operate the current through the electromagnetic coil 41 in gripping mode so as to assist the flux generated by the permanent magnet 43. In release mode, the control unit 9 applies current on the electromagnetic coil 41, which generates a magnetic field opposite to that generated by the permanent magnet 43 resulting in a reduced magnetic field of the electromagnetic gripping device 47. By this operation, a smooth transfer to and from the first sample position 15* can be provided.

The sample storage 7 comprises a plurality of sample positions 15. According to an embodiment, all the sample positions 15 are configured as a described with respect to the first sample position 15*. It is, however, also possible to configure sample positions 15 differently, for example to receive different types or sizes of sample holders 3.

The gripping apparatus 11 is configured to pick up a sample holder 3 on an arbitrary first sample position 15* and to return it on a different arbitrary sample position 15. The gripping apparatus 11 can be further configured to operate more than one sample gripper 23 at a time. For example, a plurality of sample grippers 23 can be arranged beside each other in a linear arrangement, wherein a distance between the individual sample grippers 23 matches a distance between neighboring sample positions 15 in the sample storage 7. By this measure, a plurality of sample holders 3 and samples, respectively, can be picked up in one single movement. This can be advantageous if the measuring apparatus 5 is configured for examination of more than one sample at a time. It can be further advantageous for loading or unloading of the sample storage 7.

The control unit 9 is in particular arranged in the sample gripper 23, in particular in a section of the sample gripper 23 that is not intended to contact the cold environment when picking up a sample holder from the sample storage 7. According to another embodiment, the control unit 9 is arranged in the gripping apparatus 11. According to yet another embodiment, the control unit 9 is implemented as a separate unit.

The sample storage 7 is for example accommodated in a reservoir 8, which is configured to accommodate a cooling liquid, in particular liquid nitrogen. The cooling liquid provides a cold environment, in which the sample storage 7 is arranged.

The sample gripper 23, according to another embodiment, comprises a measuring coil 49 and the control unit 9 is configured to measure a magnetic flux generated by the permanent magnet 25 on the sample position 15 so as to determine an amount of holding force applicable on the sample holder 3 when being placed on the sample position 15. This can be performed by either applying a first test signal on the measuring coil 49 or the magnetic coil 41. For example, the control unit 9 can determine and measure a characteristic of the permanent magnet 25. For this purpose, an alternating current with constant frequency and amplitude can be applied on the measuring coil 49 and/or the magnetic coil 41 as the first test signal. Together with a capacitor, the measuring coil 49 forms an LC resonant circuit. When the magnetic flux of the first permanent magnet 25 interacts with the measuring coil 49, its inductance is changed. This results in a resonance shift of the resonant circuit. Taking for example this shift of the resonance frequency as a measure, an amount of holding force applied by the permanent magnet on the sample position 15 can be estimated. The sample gripper 23 can measure the holding force of each individual sample position 15 in the sample storage 7, thereby characterizing the individual holding force for each place. This information can be used when selecting the current through the electromagnetic coil 41 for example in release mode or in gripping mode, when the gripping force has to be adjusted to be lower and higher, respectively than the holding force provided by the permanent magnet 25.

The control unit 9 can be further configured to determine the presence of the sample holder 3 in the interior space 46 of the sample gripper 23. This is performed by analyzing a second test signal, which is applied on the electromagnetic coil 41 and/or on the measuring coil 49. Similar to the above described embodiment, the control unit 9 can, for example, apply another sinusoidal AC voltage with another constant frequency and amplitude as the second test signal to one or both of the coils. The measuring coil 49 or the electromagnetic coil 41, depending on the particular implementation, together with another capacitor can be configured as a further resonant circuit. When the sample holder 3 is located in the interior space 46, this changes the inductance of the measuring coil 49 and/or the electromagnetic coil 41. This results in detuning of the further resonant circuit and this shift in the resonant frequency can be taken as a signal for the presence of the sample holder 3 at the sample gripper 23.

When the first or second test signal is applied on the electromagnetic coil 41, the test signal can be modulated on the signal, which is applied on the electromagnetic coil 41 when switching the same to holding mode or release mode.

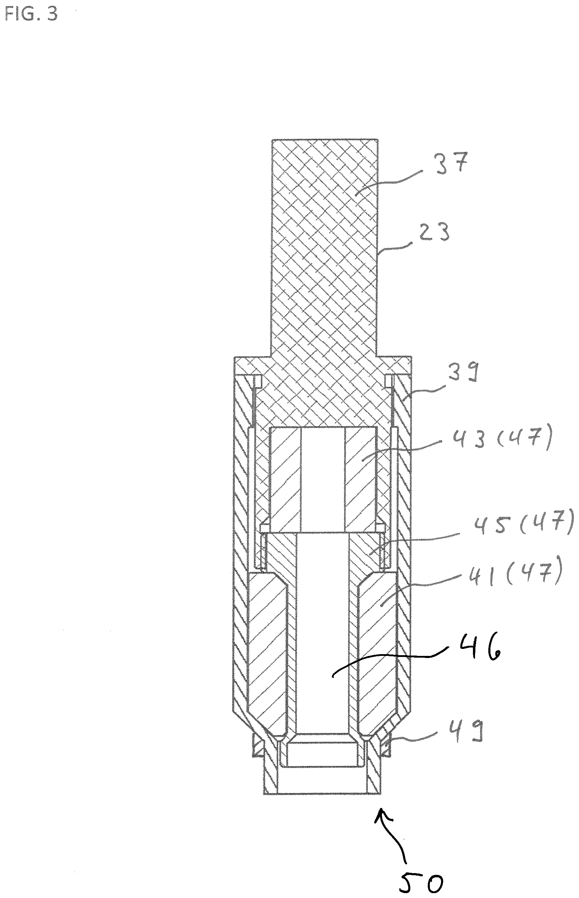

Fig. 3 is a schematic sectional view through the sample gripper 23, wherein the sample holder 3 is detached from the sample gripper. Explanations given with reference to Fig. 2 also apply to this figure.

Fig. 4 is a simplified schematic perspective view on a sample holder 3. The sample holder 3 comprises the cap 31 and the pin 33. At the free end of the pin 33, there is the sample 35. The sample holder 3 is manufactured from a magnetic or magnetizable material. The entire sample holder 3 can be manufactured from a magnetic or magnetizable material. According to an embodiment, this applies to the cap 31 only, which means that only the cap 31 is manufactured from this material. The cap 31 in turn can be manufactured also from two parts, it can for example comprise an annular ring 51, surrounding a cylindrical part at its lower end for providing the cap likes structure of the sample holder 3. It is also possible to manufacture only the annular ring 51 from a magnetizable or magnetic material. The pin 33 carrying the sample 35 on top can also be manufactured from a non-magnetic material. In particular, the pin 33 can be manufactured from the material having low thermal conductivity, for example a ceramic material. This can be advantageous for thermally insolating the sample 35 from the remaining part of the sample holder 23.

All named characteristics, including those taken from the drawings alone, and individual characteristics, which are disclosed in combination with other characteristics, are considered alone and in combination as important to the invention. Embodiments according to the invention can be fulfilled through individual characteristics or a combination of several characteristics. Features which are combined with the wording "in particular" or "especially" are to be treated as preferred embodiments.

### List of References

- 1: System
- 3: Sample Holder
- 5: Measuring Apparatus
- 7: Sample Storage
- 8: Reservoir
- 9: Control Unit
- 11: Gripping Apparatus
- 13: Processing Unit
- 15*: First Sample Position
- 15: Sample Position
- 17: Data Line
- 19: Bus Line
- 21: Electrical Connection
- 23: Sample Gripper
- 25: First Permanent Magnet
- 27: Base
- 29: Base Plate
- 31: Cap
- 33: Pin
- 35: Sample
- 37: Holding Part
- 39: Housing
- 41: Electromagnetic Coil
- 43: Permanent Magnet
- 45: Pole Shoe
- 47: Electromagnetic Gripping Device
- 46: Interior Space
- 49: Measuring Coil
- 50: Distal End
- 51: Annular Ring

## Claims

1. System (1) for handling of a sample (35), the system (1) comprising a sample storage (7) having at least a first sample position (15*), a first magnetic or magnetizable sample holder (3), a control unit (9) and a gripping apparatus (11), wherein the sample storage (7) is configured for use in a cold environment at cryogenic temperatures, in particular in a reservoir (8) filled with a cooling liquid, and the first sample position (15*) is configured to receive the first sample holder (3), which is configured to hold the sample (35), wherein
the first sample position (15*) comprises a first permanent magnet (25), which is configured to apply a holding force on the first sample holder (3), **characterized in that** the gripping apparatus (11) comprises a sample gripper (23) having an electromagnetic gripping device (47) comprising an electromagnetic coil (41), the electromagnetic gripping device (47) being configured to apply a gripping force on the first sample holder (3),
the control unit (9) is coupled to the electromagnetic coil (41) of the electromagnetic gripping device (47) **in that** it can control a current through the electromagnetic coil (41) so as to change the gripping force applied on the first sample holder (3) and the control unit (9) is configured
to control the current through the electromagnetic coil (41) in a holding mode **in that** the gripping force generated by the electromagnetic gripping device (47) is set to a holding value such that the first sample holder (3) can be lifted from the first sample position (15*)
and/or
to control the current through the electromagnetic coil (41) in a release mode **in that** the gripping force generated by the electromagnetic gripping device (47) is set to a release value such that the first sample holder (3) cannot be lifted from the first sample position (15*)
by the sample gripper (23), wherein the electromagnetic gripping device (47) comprises a permanent magnet (43) and the electromagnetic coil (41), wherein the electromagnetic coil (41) is configured to enhance or attenuate a magnetic flux of the permanent magnet (43), and the control unit (9) is configured **in that** it can control the current through the electromagnetic coil (41) so as to enhance or attenuate the gripping force applied on the sample holder (3) by the permanent magnet (43).

2. System (1) according to anyone of the preceding claims, wherein the sample storage (7) comprises a plurality of further sample positions (15), wherein every further sample position (15) comprises a further permanent magnet (25) configured to apply a holding force on the first sample holder (3) when placed on the further sample position (15) and wherein the gripping apparatus (11) is configured to pick-up or set-down the first sample holder (3) on an arbitrary further sample position (15).

3. System (1) according to anyone of the preceding claims, wherein the control unit (9) is arranged in the sample gripper (23), in particular in a section of the sample gripper (23) that is not intended to contact the cold environment when picking up a sample (35) from the sample storage (7).

4. System (1) according to anyone of the preceding claims, wherein the system (1) further comprises a reservoir (8) configured to accommodate a cooling liquid, in particular liquid nitrogen, providing a cold environment, and in which the sample storage (7) is arranged.

5. System (1) according to anyone of the preceding claims, wherein the sample gripper (23) comprises an interior space (46) opening out at a distal end (50) of the sample gripper (23), wherein the interior space (46) is configured to receive at least a part of the first sample holder (3), and wherein the electromagnetic coil (41) is arranged to at least partly surround the interior space (46).

6. System (1) according to claim 5, wherein the sample gripper (23) comprises a measuring coil (49), which is arranged to at least party surround the interior space (46), wherein in particular the measuring coil (49) is arranged having a distance to the electromagnetic coil (41) and the measuring coil (49) is arranged closer to the distal end (50) than the electromagnetic coil (41).

7. System (1) according to claim 5 or 6, wherein the control unit (9) is configured to measure a first magnetic flux generated by the first permanent magnet (25) of the first sample position (15*) so as to determine an amount of the holding force applicable on the first sample holder (3) when being placed in the first sample position (15), wherein the control unit (9) is in particular configured to measure the first magnetic flux by analyzing a first test signal applied on the electromagnetic coil (41) and/or on the measuring coil (49).

8. System according to claim 5 or 6, wherein the control unit (9) is configured to determine the presence of the first sample holder (3) in the interior space (46) of the sample gripper (23) by analyzing a second test signal applied on the electromagnetic coil (41) and/or on the measuring coil (49).

9. System according to anyone of the preceding claims, further comprising a measuring apparatus (5), in particular a measuring apparatus for analyzing the sample (35) by ionizing radiation, wherein the gripping apparatus (11) is configured to transfer the sample (35) between the sample storage (7) and the measuring apparatus (5).

## Patentansprüche

1. System (1) zur Handhabung einer Probe (35), wobei das System (1) einen Probenspeicher (7) mit mindestens einer ersten Probenposition (15*), einen ersten magnetischen oder magnetisierbaren Probenhalter (3), eine Steuereinheit (9) und eine Greifvorrichtung (11) umfasst, wobei der Probenspeicher (7) zur Verwendung in einer kalten Umgebung bei kryogenen Temperaturen, insbesondere in einem mit einer Kühlflüssigkeit gefüllten Behälter (8), ausgestaltet ist, und die erste Probenposition (15*) so ausgestaltet ist, dass sie den ersten Probenhalter (3) aufnimmt, der so ausgestaltet ist, dass er die Probe (35) hält, wobei die erste Probenposition (15*) einen ersten Permanentmagnet (25) umfasst, der so ausgestaltet ist, dass er eine Haltekraft auf den ersten Probenhalter (3) ausübt, **dadurch gekennzeichnet, dass** die Greifvorrichtung (11) einen Probengreifer (23) umfasst, der eine elektromagnetische Greifeinrichtung (47), die eine elektromagnetische Spule (41) umfasst, aufweist, wobei die elektromagnetische Greifeinrichtung (47) so ausgestaltet ist, dass sie eine Greifkraft auf den ersten Probenhalter (3) ausübt, die Steuereinheit (9) derart mit der elektromagnetischen Spule (41) der elektromagnetischen Greifeinrichtung (47) gekoppelt ist, dass sie einen Strom durch die elektromagnetische Spule (41) so steuern kann, dass sich die auf den ersten Probenhalter (3) ausgeübte Greifkraft verändert, und die Steuereinheit (9) so ausgestaltet ist, dass sie den Strom durch die elektromagnetische Spule (41) in einem Haltemodus, in dem die von der elektromagnetischen Greifeinrichtung (47) erzeugte Greifkraft auf einen Haltewert eingestellt ist, steuert, sodass der erste Probenhalter (3) aus der ersten Probenposition (15*) angehoben werden kann, und/oder den Strom durch die elektromagnetische Spule (41) in einem Freigabemodus, in dem die von der elektromagnetischen Greifeinrichtung (47) erzeugte Greifkraft auf einen Freigabewert eingestellt ist, steuert, sodass der erste Probenhalter (3) nicht von dem Probengreifer (23) aus der ersten Probenposition (15*) angehoben werden kann, wobei die elektromagnetische Greifeinrichtung (47) einen Permanentmagnet (43) und die elektromagnetische Spule (41) umfasst, wobei die elektromagnetische Spule (41) so ausgestaltet ist, dass sie einen Magnetfluss des Permanentmagnets (43) verstärkt oder abschwächt, und die Steuereinheit (9) so ausgestaltet ist, dass sie den Strom durch die elektromagnetische Spule (41) so steuern kann, dass die von dem Permanentmagnet (43) auf den Probenhalter (3) ausgeübte Greifkraft verstärkt oder abgeschwächt wird.

2. System (1) nach einem beliebigen der vorhergehenden Ansprüche, wobei der Probenspeicher (7) eine Vielzahl von weiteren Probenpositionen (15) umfasst, wobei jede weitere Probenposition (15) einen weiteren Permanentmagnet (25) umfasst, der so ausgestaltet ist, dass er eine Haltekraft auf den ersten Probenhalter (3) ausübt, wenn dieser an der weiteren Probenposition (15) platziert ist, und wobei die Greifvorrichtung (11) so ausgestaltet ist, dass sie den ersten Probenhalter (3) an einer beliebigen weiteren Probenposition (15) aufnimmt oder absetzt.

3. System (1) nach einem beliebigen der vorhergehenden Ansprüche, wobei die Steuereinheit (9) in dem Probengreifer (23) angeordnet ist, insbesondere in einem Abschnitt des Probengreifers (23), der nicht dafür vorgesehen ist, beim Aufnehmen einer Probe (35) aus dem Probenspeicher (7) mit der kalten Umgebung in Berührung zu kommen.

4. System (1) nach einem beliebigen der vorhergehenden Ansprüche, wobei das System (1) ferner einen Behälter (8) umfasst, der so ausgestaltet ist, dass er eine Kühlflüssigkeit, insbesondere Flüssigstickstoff, unterbringt, die eine kalte Umgebung bereitstellt, und in der der Probenspeicher (7) angeordnet ist.

5. System (1) nach einem beliebigen der vorhergehenden Ansprüche, wobei der Probengreifer (23) einen Innenraum (46) umfasst, der an einem distalen Ende (50) des Probengreifers (23) ausmündet, wobei der Innenraum (46) so ausgestaltet ist, dass er zumindest einen Teil des ersten Probenhalters (3) aufnimmt, und wobei die elektromagnetische Spule (41) so angeordnet ist, dass sie den Innenraum (46) zumindest teilweise umgibt.

6. System (1) nach Anspruch 5, wobei der Probengreifer (23) eine Messspule (49) umfasst, die so angeordnet ist, dass sie den Innenraum (46) zumindest teilweise umgibt, wobei die Messspule (49) insbesondere so angeordnet ist, dass sie einen Abstand zu der elektromagnetischen Spule (41) aufweist, und die Messspule (49) näher an dem distalen Ende (50) angeordnet ist als die elektromagnetische Spule (41).

7. System (1) nach Anspruch 5 oder 6, wobei die Steuereinheit (9) so ausgestaltet ist, dass sie einen ersten Magnetfluss, der von dem ersten Permanentmagnet (25) der ersten Probenposition (15*) erzeugt wird, misst, um einen Betrag der Haltekraft zu ermitteln, die auf den ersten Probenhalter (3) ausgeübt werden kann, wenn dieser in der ersten Probenposition (15) platziert ist, wobei die Steuereinheit (9) insbesondere so ausgestaltet ist, dass sie den ersten Magnetfluss durch Analysieren eines ersten Prüfsignals misst, das an die elektromagnetische Spule (41) und/oder die Messspule (49) angelegt ist.

8. System nach Anspruch 5 oder 6, wobei die Steuereinheit (9) so ausgestaltet ist, dass sie das Vorhandensein des ersten Probenhalters (3) in dem Innenraum (46) des Probengreifers (23) durch Analysieren eines zweiten Prüfsignals ermittelt, das an die elektromagnetische Spule (41) und/oder die Messspule (49) angelegt ist.

9. System nach einem beliebigen der vorhergehenden Ansprüche, das ferner eine Messvorrichtung (5), insbesondere eine Messvorrichtung zum Analysieren der Probe (35) mittels ionisierender Strahlung, umfasst, wobei die Greifvorrichtung (11) so ausgestaltet ist, dass sie die Probe (35) zwischen dem Probenspeicher (7) und der Messvorrichtung (5) transferiert.

## Revendications

1. Système (1) de manipulation d'un échantillon (35), le système (1) comprenant un emplacement (7) de stockage d'échantillons ayant au moins une première position d'échantillon (15*), un premier support d'échantillon (3) magnétique ou magnétisable, une unité de commande (9) et un appareil de préhension (11), l'emplacement (7) de stockage d'échantillons étant conçu pour être utilisé dans un environnement froid à des températures cryogéniques, en particulier dans un réservoir (8) rempli d'un liquide de refroidissement, et la première position d'échantillon (15*) est conçue pour recevoir le premier support d'échantillon (3), qui est conçu pour maintenir l'échantillon (35), la première position d'échantillon (15*) comprenant un premier aimant permanent (25), qui est conçu pour appliquer une force de maintien sur le premier support d'échantillon (3), **caractérisé en ce que**
l'appareil de préhension (11) comprend un préhenseur d'échantillon (23) ayant un dispositif (47) de préhension électromagnétique comprenant une bobine électromagnétique (41), le dispositif (47) de préhension électromagnétique étant conçu pour appliquer une force de préhension sur le premier support d'échantillon (3 ),
l'unité de commande (9) est couplée à la bobine électromagnétique (41) du dispositif (47) de préhension électromagnétique en ce sens qu'elle est apte à commander un courant à travers la bobine électromagnétique (41) de manière à modifier la force de préhension appliquée sur le premier support d'échantillon (3) et l'unité de commande (9) est conçue pour commander le courant à travers la bobine électromagnétique (41) dans un mode de maintien dans lequel la force de préhension générée par le dispositif (47) de préhension électromagnétique est réglée à une valeur de maintien telle que le premier support d'échantillon (3) est apte à être soulevé depuis la première position d'échantillon (15*),
et/ou
pour commander le courant à travers la bobine électromagnétique (41) dans un mode de libération dans lequel la force de préhension générée par le dispositif (47) de préhension électromagnétique est réglée à une valeur de libération telle que le premier support d'échantillon (3) ne peut pas être soulevé de la première position d'échantillon (15*) par le préhenseur d'échantillon (23), le dispositif (47) de préhension électromagnétique comprenant un aimant permanent (43) et la bobine électromagnétique (41), la bobine électromagnétique (41) étant conçue pour améliorer ou atténuer un flux magnétique de l'aimant permanent (43), et l'unité de commande (9) est conçue de telle sorte qu'elle est apte à commander le courant à travers la bobine électromagnétique (41) de manière à améliorer ou atténuer la force de préhension appliquée sur le support d'échantillon (3) par l'aimant permanent (43).

2. Système (1) selon l'une quelconque des revendications précédentes, dans lequel l'emplacement (7) de stockage d'échantillons comprend une pluralité d'autres positions d'échantillon (15), chaque autre position d'échantillon (15) comprenant un autre aimant permanent (25) conçu pour appliquer une force de maintien sur le premier support d'échantillon (3) lorsqu'il est placé sur l'autre position d'échantillon (15) et l'appareil de préhension (11) étant conçu pour saisir ou déposer le premier support d'échantillon (3) en une autre position d'échantillon (15), arbitraire.

3. Système (1) selon l'une quelconque des revendications précédentes, dans lequel l'unité de commande (9) est agencée dans le préhenseur d'échantillon (23), notamment dans une section du préhenseur d'échantillon (23) qui n'est pas destinée à entrer en contact avec l'environnement froid lors du prélèvement d'un échantillon (35) dans l'emplacement (7) de stockage d'échantillons.

4. Système (1) selon l'une quelconque des revendications précédentes, dans lequel le système (1) comprend en outre un réservoir (8) conçu pour recevoir un liquide de refroidissement, notamment de l'azote liquide, fournissant un environnement froid, et dans lequel l'emplacement (7) de stockage d'échantillons est agencé.

5. Système (1) selon l'une quelconque des revendications précédentes, dans lequel le préhenseur d'échantillon (23) comprend un espace intérieur (46) débouchant au niveau d'une extrémité distale (50) du préhenseur d'échantillon (23), l'espace intérieur (46 ) étant conçue pour recevoir au moins une partie du premier support d'échantillon (3), et la bobine électromagnétique (41) étant agencée pour entourer au moins en partie l'espace intérieur (46).

6. Système (1) selon la revendication 5, dans lequel le préhenseur d'échantillon (23) comprend une bobine de mesure (49), qui est agencée pour entourer au moins en partie l'espace intérieur (46), la bobine de mesure (49) étant notamment agencée de manière à avoir une distance par rapport à la bobine électromagnétique (41), et la bobine de mesure (49) est agencée plus près de l'extrémité distale (50) que la bobine électromagnétique (41).

7. Système (1) selon la revendication 5 ou la revendication 6, dans lequel l'unité de commande (9) est conçue de façon à mesurer un premier flux magnétique généré par le premier aimant permanent (25) de la première position d'échantillon (15*) de manière à déterminer une quantité de force de maintien applicable sur le premier support d'échantillon (3) lorsqu'il est placé dans la première position d'échantillon (15), l'unité de commande (9) étant en particulier conçue de façon à mesurer le premier flux magnétique en analysant un premier signal de test appliqué sur la bobine électromagnétique (41) et/ou sur la bobine de mesure (49).

8. Système selon la revendication 5 ou la revendication 6, dans lequel l'unité de commande (9) est conçue pour déterminer la présence du premier support d'échantillon (3) dans l'espace intérieur (46) du préhenseur d'échantillon (23) en analysant un deuxième signal de test appliqué sur la bobine électromagnétique (41) et/ou sur la bobine de mesure (49).

9. Système selon l'une quelconque des revendications précédentes, comprenant en outre un appareil de mesure (5), en particulier un appareil de mesure pour analyser l'échantillon (35) par rayonnement ionisant, l'appareil de préhension (11) étant conçu pour transférer l'échantillon (35) entre l'emplacement (7) de stockage d'échantillons et l'appareil de mesure (5).
